# EUROPEAN PATENT SPECIFICATION

(11) **EP 4 075 146 B1**
(45) Date of publication and mention of the grant of the patent: **22.07.2026**
(21) Application number: 20899717.1
(22) Date of filing: 12.10.2020
(51) Int. Cl.: G01N 35/10

(54) **AUTOMATED ANALYZER**
AUTOMATISIERTER ANALYSATOR
ANALYSEUR AUTOMATISÉ

(30) Priority: 09.12.2019 JP 2019221987
(43) Date of publication of application: 19.10.2022
(73) Proprietor: Hitachi High-Tech Corporation, Minato-ku Tokyo 105-6409 (JP)
(72) Inventor: HORIE, Yosuke, Tokyo 100-8280 (JP); NOJIMA, Akihiro, Tokyo 100-8280 (JP); OCHI, Manabu, Tokyo 100-8280 (JP); TAKADA, Eiichiro, Tokyo 105-6409 (JP); MIYAKE, Yuka, Tokyo 105-6409 (JP)
(74) Representative: MERH-IP Matias Erny Reichl Hoffmann Patentanwälte PartG mbB
(86) International application number: PCT/JP2020/038455
(87) International publication number: WO 2021/117326

(56) References cited:
- EP-A1- 2 025 418
- EP-A1- 2 947 463
- CN-A- 109 521 214
- JP-A- 2002 162 403
- JP-A- 2008 224 244
- JP-A- S62 242 858
- US-A1- 2011 293 474
- US-A1- 2012 003 731

## Description

### Technical Field

The present invention relates to an automatic analysis device.

### Background Art

In an automatic analysis device, a probe is repeatedly used to dispense a sample, a reagent, or both thereof, and accordingly, the probe is cleaned before suctioning another liquid. When the probe is not sufficiently cleaned, a previous liquid component may be brought into (carried over) a next liquid, which may affect an inspection result. Even when the probe is sufficiently cleaned and an adhering suctioned liquid is removed, cleaning water may remain in the probe and be brought into a liquid to be suctioned next. The liquid into which the cleaning water was brought is diluted, which affects inspection.

PTL 1 is known as a technique of improving dispensing accuracy by preventing water from being brought in. PTL 1 describes "a two-stage motion method in which a probe is temporarily stopped once being pulled up halfway in a cleaning tank, and the probe is pulled up to the top when a water drop is seen coming down" (page 4). PTL 2 relates to an automatic analyzer, where an outer wall cleaning operation of the probe is performed at a respectively determined distinct cleaning height in a cleaning chamber, depending on whether only the outer wall cleaning operation shall be performed, an inner and the outer wall cleaning operation shall be performed simultaneously, or the inner and the outer wall cleaning operation shall be performed simultaneously in the course of daily cleaning and maintenance. PTL 3 relates to an automatic analysis apparatus, where the washing of the outer wall of the sample probe is performed without horizontal movement of the sample probe.

### Citation List

### Patent Literature

PTL 1: JP-A-4-6468
PTL 2: CN 109 521 214 A
PTL 3: US 2011/ 293 474 A1

### Summary of Invention

### Technical Problem

When cleaning the outside of the probe by discharging the cleaning water toward the outside of the probe, certain time is required until adhering cleaning water comes down as a water drop. However, in the automatic analysis device described in the above PTL 1, the cleaning water continues being discharged for the certain time, and thus the used water amount increases.

The invention is made in view of such a problem, and an object of the invention is to provide an automatic analysis device that reduces a used water amount when cleaning the outside of a probe.

### Solution to Problem

In order to solve the above problem, it is provided an automatic analysis device having the features defined in claim 1. Further preferred embodiments are provided in the dependent claims.

### Advantageous Effect

According to the invention, it is possible to provide an automatic analysis device that reduces a used water amount when cleaning outside of a probe.

### Brief Description of Drawings

[Fig. 1] Fig. 1 is a top view showing a configuration of an automatic analysis device according to an embodiment.
[Fig. 2] Fig. 2 is a diagram showing a configuration of a flow path relating to the cleaning of a sample probe according to the embodiment.
[Fig. 3] Fig. 3 is a diagram showing a method of cleaning the outside of the sample probe according to the embodiment.
[Fig. 4] Fig. 4 is a time chart at the time of cleaning the outside of the sample probe according to the embodiment.
[Fig. 5] Fig. 5 is a diagram showing a water flow confirmation step of confirming a range of a flow of cleaning water.
[Fig. 6] Fig. 6 is a control block diagram for performing probe cleaning and probe position adjustment of the embodiment.

### Description of Embodiments

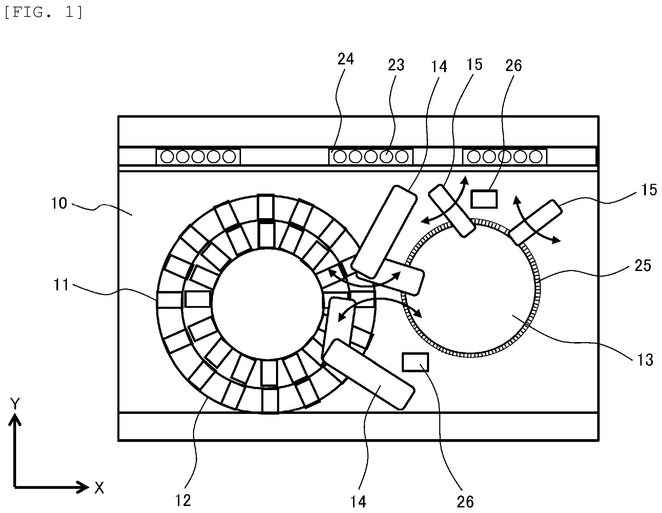

Hereinafter, with reference to FIGS. 1 to 6, an embodiment according to the invention will be described in detail.

FIG. 1 is a view showing a configuration of an automatic analysis device according to the embodiment. An automatic analysis device 10 includes a reagent disk 12 on which a plurality of reagent vessels 11 are mounted, a reaction disk 13 that mixes a reagent and a sample and measures a reaction, a reagent dispensing mechanism 14 that suctions and discharges the reagent, a sample dispensing mechanism 15 that suctions and discharges the sample, and the like. The reagent dispensing mechanism 14 includes a reagent probe (not shown) that dispenses the reagent, and the sample dispensing mechanism 15 includes a sample probe 22 that dispenses the sample. The sample put into the automatic analysis device is mounted on a rack 24 and transported in a state of being placed into a sample vessel (test tube) 23. A plurality of sample vessels 23 are mounted on the rack 24. The sample is a blood-derived sample such as serum or whole blood, urine, or the like.

The sample dispensing mechanism 15 moves the sample probe 22 to a suction position at which the sample is suctioned from the sample vessels 23, a discharge position at which the sample is discharged to a cell 25, and a cleaning position at which a tip of the sample probe 22 is cleaned in a cleaning tank 26 by a rotation operation. Further, the sample dispensing mechanism 15 lowers the sample probe 22 in accordance with heights of the sample vessels 23, the cell 25, and the cleaning tank 26 at the suction position, the discharge position, and the cleaning position, respectively.

Each of the sample probe 22 and the reagent probe includes a liquid contact detection sensor (sensor using a change in electrostatic capacitance or pressure) that detects a liquid surface, and it can be confirmed from a sensor signal that the probe came into contact with a target liquid (the sample or the reagent). In probe cleaning, since a cleaning water amount can be reduced by limiting a contact range with the target liquid, a range in which the probe is immersed in the target liquid is generally controlled. There is also an effect of preventing a dispensing variation by limiting the immersion range.

The automatic analysis device 10 analyzes a concentration of a predetermined component in the sample by performing photometric measurement of a liquid mixture of the sample and the reagent contained in the cell 25.

In the embodiment, the cleaning of the sample probe 22 is described as an example, and the same implementation method may be applied to a case of the reagent probe in which the same probe is washed and repeatedly used.

The implementation method can also be applied to a device that dispenses the sample and the reagent with one probe.

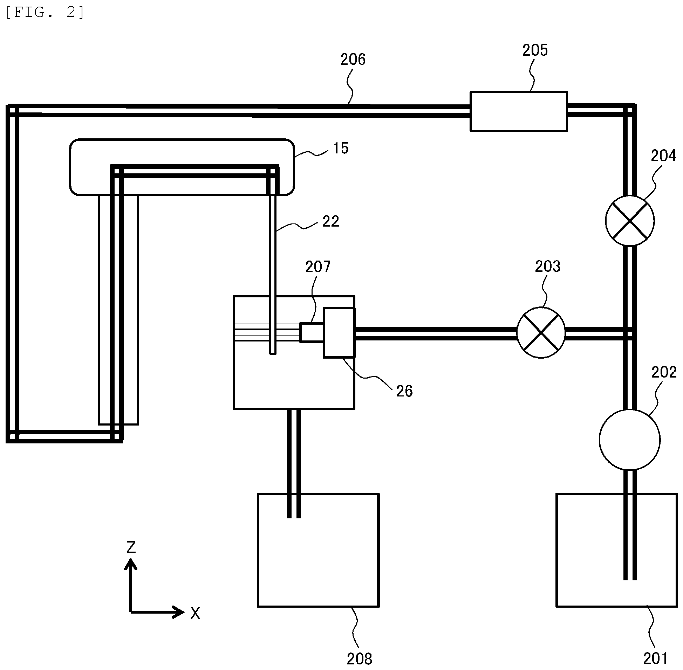

Fig. 2 is a diagram showing a configuration of a flow path relating to the cleaning of the sample probe 22 according to the embodiment. The cleaning flow path according to the embodiment includes a water supply tank 201 that stores pure water used for cleaning, a water supply pump 202 that sends the pure water from the water supply tank, a solenoid valve that cleans the outside of a probe (hereinafter, referred to as a solenoid valve for external cleaning) 203, a solenoid valve that cleans the inside of a probe (hereinafter, referred to as a solenoid valve for internal cleaning) 204, a syringe pump 205 that suctions and discharges a liquid at the time of dispensing, a tube 206 that connects flow path components, a cleaning nozzle 207 that discharges a water flow to the outside of the sample probe 22, and a waste liquid tank 208 that collects a waste liquid of the cleaning water.

To clean the inside of the sample probe 22, water is sent from the tube 206 connected to the sample probe 22 by opening the solenoid valve for internal cleaning 204, and dirt inside the sample probe 22 is pushed out and cleaned. Similarly, to clean the outside of the sample probe 22, the water sent from the water supply pump 202 by opening the solenoid valve for external cleaning 203 is discharged from the cleaning nozzle 207, and the water flow from the cleaning nozzle 207 comes into contact with the sample probe 22, thereby removing dirt adhering to the sample probe 22. Although there are various types of dirt adhering to the probe, the dirt can be dissolved and removed by being brought into contact with the water for a certain period of time.

In the case of a large device, the pure water is always supplied to the water supply tank 201 from a water supply path of a pure water facility, and the waste liquid in the waste liquid tank 208 is discharged to a drainage channel connected to a dedicated drainage facility. A small device is often operated only by tanks as shown in FIG. 2.

When the water supply pump 202 is constantly operated and applied with pressure, a load is applied to the pump, and thus it is necessary to drive the water supply pump 202 only when the sample probe 22 is cleaned, or to add a flow path for returning a part of the flow path from the water supply pump 202 to the water supply tank 201.

In the embodiment, there is no problem in implementation as long as the water flow from the cleaning nozzle 207 is not affected in either method.

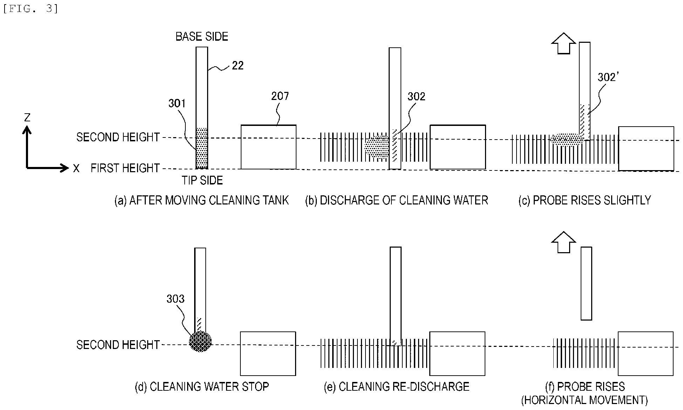

Fig. 3 is a diagram showing a method of cleaning the outside of the sample probe 22 according to the embodiment.

In FIG. 3, the cleaning is performed in an order of (a) to (f). (a) of FIG. 3 is a diagram showing a state in which the sample probe 22 after dispensing the sample is moved to the cleaning tank 26. Since the outside of the sample probe 22 was immersed to the sample in a certain depth, a sample residue 301 remains in the same range. Here, in order to reduce the cleaning water amount, the cleaning nozzle 207 having a small diameter that discharges a water flow having a low flow rate and a high flow velocity is effective, but an entire region of the cleaning range of the sample probe 22 cannot be washed once due to a small width of the water flow. In this cleaning method, a flow assuming a condition that the width of the water flow is smaller than the cleaning range is described.

(b) of FIG. 3 shows a state in which the solenoid valve for external cleaning 203 is opened and the water flow from the cleaning nozzle 207 is discharged toward the sample probe 22. As described above, since the width of the water flow (here, a distance in a Z direction) is smaller than the immersion range in the sample, the tip of the sample probe 22 does not come into contact with the water flow and protrudes slightly at a time in (b) of FIG. 3. For example, when the cleaning range of the sample probe 22 is 4 mm and the width of the water flow is 3 mm, a position at which the tip of the sample probe 22 protrudes by about 1 mm is preferable. At this time, it is necessary that an upper end side of the cleaning range of the sample probe 22 (a probe base portion side) is wetted with the cleaning water by the water flow from the cleaning nozzle 207.

Since the cleaning water in contact with the sample probe 22 wets the sample probe 22 and spreads on a surface of the sample probe 22 (a range to be wet with cleaning water 302), the surface is wetted in a range slightly wider than the width of the water flow.

(c) of FIG. 3 shows a state in which a height of the sample probe 22 is increased by about millimeters while the water flow remains being discharged from the state in the (b) of FIG. 3. Since the height of the sample probe 22 is increased by millimeters, the water flow also hits the tip of the sample probe 22 which was not directly hit by the water flow in the state in (b) of FIG. 3, and the sample residue 301 is washed off. In a lifting operation of the sample probe 22 during the transition from (b) of FIG. 3 to (c) of FIG. 3, it is also possible to obtain an effect of collecting the dirt inside and outside the sample probe 22 to a tip side of the sample probe 22 by an acceleration during movement. When reaching the state in (c) of FIG. 3, a range 302' wet with the cleaning water is the entire cleaning range.

(d) of FIG. 3 shows a state in which the solenoid valve for external cleaning 203 is closed to stop the water flow from the cleaning nozzle 207 at the position of the sample probe 22 stopped in (c) of FIG. 3. When the state in (d) of FIG. 3 continues for a certain period of time, a mixture 303 of the cleaning water adhering to the sample probe 22 and the sample residue 301 (diluted by cleaning) remaining on an outer surface of the sample probe 22 in (b) and (c) of FIG. 3 gathers at the tip of the sample probe 22. A reason why the sample residue 301 gathers is that the sample residue 301 remaining in the range 302' wet with the cleaning water dissolves in the water. In this way, the mixture 303 of the cleaning water and the sample residue gathers at the tip of the sample probe 22 due to gravity or surface tension.

(e) of FIG. 3 shows a state in which the solenoid valve for external cleaning 203 is opened again and the water flow is discharged from the cleaning nozzle 207 at the position of the sample probe 22 stopped in (d) of FIG. 3. When the water flow hits the tip of the sample probe 22, the mixture 303 collected at the tip of the sample probe 22 is removed. It is necessary that the water flow in (e) of FIG. 3 only hits the tip of the sample probe 22. Therefore, it is desirable that only the tip of the sample probe 22 is hit by the water flow in (c) of FIG. 3. When the water flow hits the sample probe 22 in a wide range in (e) of FIG. 3, the cleaning water remains on the surface of the sample probe 22, and then the cleaning water is brought into a target container from which the sample probe 22 suctions a liquid to dilute the liquid.

The expression "only the tip of the sample probe 22 is hit by the water flow" allows the water flow to hit a vicinity of the tip of the sample probe 22 rather than a strict sense. However, it is desirable that the tip of the sample probe 22 is located at least above a height center of the water flow, and a height range in which the water flow directly hits the tip of the sample probe 22 is 1 mm or less from the tip of the sample probe 22.

(f) of FIG. 3 shows a state in which the cleaning of the sample probe 22 is finished and the sample probe 22 is raised. In this state, the solenoid valve for external cleaning 203 is closed to stop the water flow. As long as the sample probe 22 is separated from the water flow, a timing of closing the solenoid valve for external cleaning 203 may be any timing.

In the cleaning operation described above, a step of discharging the water flow from the cleaning nozzle 207 in (b) and (c) of FIG. 3 is referred to as a first discharging step, and a step of discharging the water flow again in (e) of FIG. 3 is referred to as a second discharging step. Since cleaning roles are different between the first discharging step and the second discharging step, the first discharging step needs to be longer than the second discharging step in terms of a time ratio. In the cleaning in the first discharging step, the entire cleaning range of the sample probe 22 is wetted, and most of the sample residue 301 is removed by the water flow. On the other hand, in the cleaning in the second discharging step, the mixture 303 of the cleaning water and the diluted sample is removed by an instantaneous water flow. Therefore, in the second discharging step, it is necessary to prevent the cleaning water from wetting and spreading on the sample probe 22 as much as possible, and a time of the second discharging step is preferable as short as about tens of milliseconds. A time of the first discharging step may be adjusted in accordance with a water amount that can be used, and is desirably hundreds of milliseconds or more, which is about ten times the time of the second discharging step.

In the embodiment, there are two stop positions of the sample probe 22 including a first height position in (a) and (b) of FIG. 3 and a second height position in (c), (d), and (e) of FIG. 3. The timing of moving from the first height position to the second height position may be the timing shown in (d) of FIG. 3 in which the cleaning water is stopped in addition to the timing shown in (c) of FIG. 3, but is preferably the timing shown in (c) of FIG. 3 at which the tip of the probe can be directly cleaned during the movement.

In the above cleaning operation, the discharging step is implemented by two times. Alternatively, for example, when the cleaning range is about 10 mm and the water flow is about 4 mm, the first discharging step may be divided into two times.

In this case, in (b) of FIG. 3, the cleaning may be started from the upper end side of the cleaning range (sample immersion range) of the sample probe 22 as the first discharging step at the first time, and the cleaning may be started from the middle of the cleaning range as the first discharge step at the second time.

Here, in the above cleaning operation, it is necessary to adjust a relative position between the water flow from the cleaning nozzle 207 and the sample probe 22. For example, when the water flow for cleaning is columnar, the cleaning range decreases when the position of the sample probe 22 shifts in a horizontal direction from a center axis of a column. Further, when a stop height of the sample probe 22 shifts from the first height position, the cleaning range in (b) of FIG. 3 increases or decreases. When the cleaning range increases, a water adhesion amount increases, and when the cleaning range decreases, a range in which the probe cannot be cleaned occurs. When the stop height of the sample probe 22 shifts from the second height position, the mixture 303 cannot be removed in (e) of FIG. 3. Therefore, as will be described later, it is necessary to adjust the cleaning position of the sample probe 22.

The above cleaning operation omits an operation of cleaning the inside of the sample probe 22, and can be performed regardless of whether the inside of the sample probe 22 is cleaned. When an operation of suctioning a next liquid is performed without cleaning the inside of the sample probe 22, the tip of the sample probe 22 is taken out from the water flow as shown in (b) of FIG. 3, so that an amount of the cleaning water entering the inside of the sample probe 22 can be reduced. In order to further obtain this effect, it is desirable to make the time of (b) of FIG. 3 longer than the time of (c) of FIG. 3.

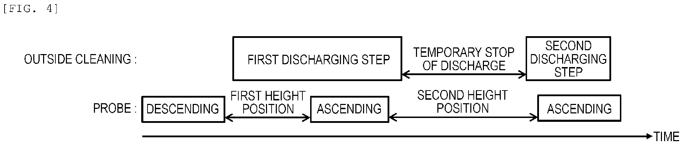

FIG. 4 is a time chart at the time of cleaning the outside of the sample probe 22 according to the embodiment. FIG. 4 summarizes the timing of the operation in FIG. 3. First, when the tip of the sample probe 22 is moved to the first height position by a lowering operation of the sample probe 22, the lowering operation of the sample probe 22 is stopped, and thereafter, discharge of the cleaning water from the cleaning nozzle 207 is started to perform the first discharging step. Here, in the embodiment, since the width of the water flow from the cleaning nozzle 207 is small in order to reduce a used water amount, the first height position is below a lower end of a flow of the cleaning water, and the cleaning water does not directly hit the first height position. When the tip of the sample probe 22 is at the first height position, an upper end of the water flow from the cleaning nozzle 207 substantially coincides with a vicinity of the upper end of a height range of the probe to be cleaned (height range in which the sample or the like adheres). When the outside of the sample probe 22 is cleaned in the first discharging step, the inside of the sample probe 22 may be cleaned at the same time.

During the first discharging step, the sample probe 22 is slightly raised and is stopped in a state in which the tip of the sample probe 22 is at the second height position. The second height position is slightly lower than the upper end of the flow of the cleaning water from the cleaning nozzle 207, and the cleaning water barely directly hits the second height position.

In this way, in the first discharging step, the cleaning water directly hits over a wide range in a height direction of the sample probe 22, and the sample or the like adhering to the outside of the sample probe 22 is cleaned away. When the first discharging step is finished, a discharge stopping step of stopping the discharge of the cleaning water from the cleaning nozzle 207 is performed. In the discharge stopping step, the sample probe 22 is not moved, and is kept on standby until the cleaning water falls while dissolving the sample or the like adhering to a wall surface of the sample probe 22.

When the discharge stopping step for a predetermined time is finished, the discharge from the cleaning nozzle 207 is started again in a state in which the tip of the sample probe 22 is at the second height position to perform the second discharging step. The second discharging step is shorter than the first discharging step. Immediately after restarting the discharge from the cleaning nozzle 207, the sample probe 22 is raised or horizontally moved, and then the discharge from the cleaning nozzle 207 is stopped. When the cleaning water is discharged from the cleaning nozzle 207, an operation of pulling out (separating) the tip of the sample probe 22 from the water flow is performed, so that an effect of pulling off the cleaning water remaining inside and outside the sample probe 22 by the surface tension can be expected. By making an acceleration when the tip of the sample probe 22 is raised from the second height position higher than an acceleration when the sample probe 22 is raised at the time of suction and discharge, it is possible to efficiently drop the cleaning water by an inertial force. Further, the acceleration at the time of raising from the second height position may be made higher than an acceleration at the time of raising from the first height position. The acceleration when the sample probe 22 is raised from the first height position is lowered in order to enhance a cleaning effect on the outside of the sample probe 22 in the first discharging step.

The embodiment shows a case where the first discharging step is performed once. Alternatively, when the probe height range to be cleaned is wide, the first discharging step may be divided into a plurality of steps, an upper region of the sample probe 22 may be cleaned first, and then an intermediate region and a lower region of the sample probe 22 may be cleaned, so that the entire range is wetted with the cleaning water. Here, during a period from the cleaning of the upper region to the cleaning of the lower region, the discharge of the cleaning water may be continued without stop, but it is necessary to temporarily stop the discharge before the second discharging step.

According to the cleaning method of the embodiment, the discharge stopping step is provided between the first discharging step and the second discharging step. After waiting for the collection of the cleaning water or the like at the tip of the sample probe 22, the cleaning water is discharged toward the tip of the sample probe 22 in the second discharging step, thereby removing the water and a residual deposit collected at the tip. In the discharge stopping step, it is also possible to utilize a phenomenon in which the residual deposit is dissolved into the water while the cleaning water gathers at the tip of the sample probe 22. Since the discharge of the cleaning water is not required in the discharge stopping step, the cleaning effect can be obtained with a small amount of water as a whole.

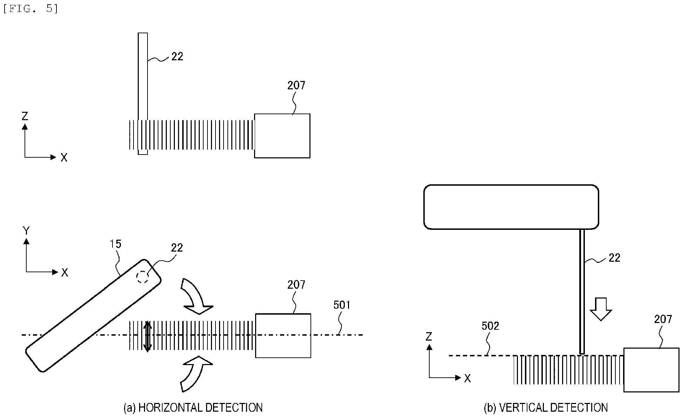

FIG. 5 is a diagram showing a water flow confirmation step of confirming a range of the flow of the cleaning water discharged from the cleaning nozzle 207 according to the embodiment. (a) of FIG. 5 shows a case where positions of both ends in the horizontal direction of the water flow are confirmed, and (b) of FIG. 5 shows a case where an upper end position in a vertical direction of the water flow is confirmed. In the embodiment, a case where a capacitive liquid contact detection sensor is provided in the sample probe 22 will be described as an example.

Since the cleaning nozzle 207 has a circular discharge port, a cross section of the water flow has a shape close to a circular shape. First, in (a) of FIG. 5, the height of the sample probe 22 is set to a height (for example, a second height position) at which the tip of the sample probe 22 comes into contact with the water flow from the cleaning nozzle 207, and a timing at which the cleaning water at the tip of the sample probe 22 starts to be detected is examined while the sample probe 22 is rotated in the horizontal direction. Specifically, while an arm of the sample dispensing mechanism 15 is rotated at a constant speed from a certain reference position, time until a signal of the liquid contact detection sensor changes by a constant value or more or a rotation angle of a motor (a stepping motor uses the number of pulses, and a servo motor uses a count value of an encoder) is confirmed. By performing this confirmation operation from both sides in the horizontal direction of the water flow, a center position of water flow 501 can be known.

Next, in (b) of FIG. 5, a timing at which the cleaning water at the tip of the sample probe 22 starts to be detected is examined while the sample probe 22 is lowered in the vertical direction from above the center position of water flow 501. Specifically, while the arm is lowered at a constant speed, time until the signal of the liquid contact detection sensor changes by more than a certain value or a rotation angle of the motor is confirmed, so that the position at which the arm starts to come into contact with the water flow (an upper end position of water flow 502) can be known.

The shape of the water flow including the width of the water flow can be known by performing the two detection operations described above. Alternatively, it is sufficient that at least the center position of water flow 501 and the upper end position of the water flow 502 can be confirmed. An adjustment is performed as follows such that the sample probe 22 at the time of cleaning is located at a predetermined position in a manner of reflecting a result of the water flow confirmation step. That is, since the cleaning effect on the outside of the sample probe 22 is higher as the surface of the water flow hitting the sample probe 22 is wider, a horizontal position of the sample probe 22 during cleaning is adjusted to coincide with the detected center position of water flow 501. The upper end of the cleaning range of the sample probe 22 needs to be in a vicinity of the upper end position of water flow 502, and thus when the first discharging step is started, the upper end of the cleaning range of the sample probe 22 is adjusted to coincide with the detected upper end position of water flow 502.

When the shape of the discharge port of the cleaning nozzle 207 is the circular shape, the shape of the cross-section of the water flow is also a substantially circular shape, and thus the height of the water flow can be estimated from the width of the detected water flow. The stop height of the tip of the sample probe 22 may be determined using the height of the water flow.

When the cross section of the water flow has a shape in which the height and the length of the width are substantially the same as each other, such as the circular shape, the height of the water flow can be estimated by detecting the width of the water flow. For example, the width of the water flow is detected a plurality of times by changing the height of the sample probe 22, and the height of the sample probe 22 at which the detected width of the water flow is maximum is the center of the water flow in the height direction. When the width of the detected water flow in the horizontal direction is X, the width of the water flow in the height direction is also X, and X/2 from the center of the water flow in the height direction is the upper end of the water flow.

In addition, the adjustment is also possible by changing the position of the sample probe 22 in the horizontal direction and repeating the detection of the height of the water flow. In this method, the horizontal position at which the sample probe 22 is lowered at a different horizontal position and the cleaning water is detected in shortest time (earliest time) is the center position of the water flow in the horizontal direction. In this case, since the center position of water flow and the upper end of the water flow can be detected simultaneously, it is not necessary to detect the width of the water flow in the horizontal direction.

The water flow confirmation step described above is performed when the automatic analysis device 10 performs a daily adjustment operation to enter an inspection operation, when the sample probe 22 is replaced for maintenance, or the like. Accordingly, even when the width of the water flow is particularly reduced, it is possible to reduce a change in the cleaning effect due to a positional deviation of the sample probe 22.

In the embodiment, when the water flow range is confirmed, the capacitive liquid contact detection sensor detects the presence or absence of the cleaning water. Alternatively, the invention is not limited thereto. For example, a contact position and the timing of the sample probe 22 and the water flow may be detected using a pressure sensor connected to the sample probe 22 via the tube 206 or an image sensor (camera or the like) provided in the vicinity of the cleaning tank 26.

In the case of using the pressure sensor, the sample probe 22 is moved in the horizontal direction and the vertical direction respectively while performing a suction operation by the syringe pump 205, and a position in which a signal of the pressure sensor exceeds a certain value is searched for. When there is a change in a pressure value regardless of the operation of the syringe pump 205, the water of the water flow is suctioned, and thus the position of the water flow can be known.

When the image sensor is used, the position of the sample probe 22 can be adjusted by providing the image sensor at a position where the horizontal direction and the vertical direction of the water flow can be observed and confirming the relative position between the water flow and the probe from a captured image.

In the embodiment, the probe cleaning and the probe position adjustment (water flow confirmation step) using the water flow from the horizontal direction in which the direction of the cleaning nozzle 207 is horizontal with respect to the sample probe 22 are described. Alternatively, the discharge direction of the water flow may be from an obliquely upper side or an obliquely lower side. The water flow confirmation step according to the embodiment can also be applied to the automatic analysis device that performs general probe cleaning without providing the discharge stopping step. By periodically adjusting the positional deviation of the sample probe 22 with respect to the flow of the cleaning water, a stable cleaning performance can be maintained.

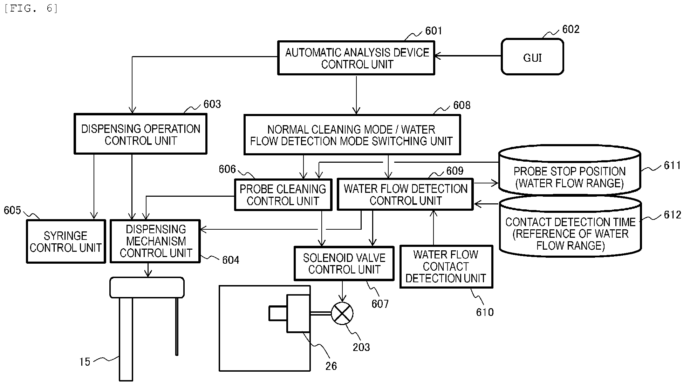

Fig. 6 is a control block diagram for performing the probe cleaning and the probe position adjustment of the embodiment. An automatic analysis device control unit 601 is a central processing unit that controls the entire device, and receives an inspection instruction or the like from a user via a GUI 602. In a normal operation, a dispensing operation control unit 603 repeatedly performs a dispensing operation by a dispensing mechanism control unit 604 and a syringe control unit 605. In the dispensing operation, a probe cleaning control unit 606 and a solenoid valve control unit 607 clean the sample probe 22.

When the range of the water flow from the cleaning nozzle 207 is confirmed and the position of the sample probe 22 with respect to the water flow is adjusted, a mode is switched to a mode for water flow detection by a mode switching unit 608. A water flow detection control unit 609 performs the water flow confirmation step described above using the dispensing mechanism control unit 604, the solenoid valve control unit 607, and a water flow contact detection unit 610. When the confirmation of the range of the water flow is completed in the water flow confirmation step, the stop positions of the sample probe 22 are adjusted, and stop coordinates, a motor rotation angle, or the number of pulses after the adjustment is recorded in probe stop position data 611. When the liquid contact detection sensor detects the presence or absence of the cleaning water at the tip of the sample probe 22, the water flow range can be confirmed by comparison with reference data of contact detection time 612.

According to the above embodiment, it is possible to implement the probe cleaning in which a sufficient cleaning effect is stably obtained with a small amount of the cleaning water.

### Reference Sign List

- 10:: automatic analysis device
- 11:: reagent vessel
- 12:: reagent disk
- 13:: reaction disk
- 14:: reagent dispensing mechanism
- 15:: sample dispensing mechanism
- 22:: sample probe
- 23:: sample vessel
- 24:: rack
- 25:: cell
- 26:: cleaning tank
- 201:: water supply tank
- 202:: water supply pump
- 203:: solenoid valve for external cleaning
- 204:: solenoid valve for internal cleaning
- 205:: syringe pump
- 206:: tube
- 207:: cleaning nozzle
- 301:: sample residue
- 302:: range to be wet with cleaning water
- 303:: mixture
- 501:: center position of water flow
- 502:: upper end position of water flow
- 601:: automatic analysis device control unit
- 602:: GUI
- 603:: dispensing operation control unit
- 604:: dispensing mechanism control unit
- 605:: syringe control unit
- 606:: probe cleaning control unit
- 607:: solenoid valve control unit
- 608:: mode switching unit
- 609:: water flow detection control unit
- 610:: water flow contact detection unit
- 611:: probe stop position data
- 612:: reference data of contact detection time

## Claims

1. An automatic analysis device comprising:
a probe (22) that is configured to perform suction and discharge of a sample or a reagent, and a cleaning nozzle (207) that is configured to discharge cleaning water toward an outside of the probe (22),
the automatic analysis device (10) is configured to perform a probe cleaning step by sequentially executing:
a first discharging step of starting discharge of the cleaning water from the cleaning nozzle (207) when the tip of the probe (22) is at a first height position,
a probe rising step wherein the probe is located at a second height position above the first height position during the first discharging step,
a discharge stopping step of stopping the discharge of the cleaning water from the cleaning nozzle (207) when the probe is at the second position, and
a second discharging step of again starting discharge of the cleaning water from the cleaning nozzle (207) when the tip of the probe (22) is at the second height position.

2. The automatic analysis device according to claim 1, wherein
in the second discharging step, the cleaning water is applied only to the tip of the probe (22).

3. The automatic analysis device according to claim 1, wherein
the first height position is below a lower end of the flow of the cleaning water.

4. The automatic analysis device according to claim 1, wherein
the first discharging step includes, in addition to the discharging step when the tip of the probe (22) is at the first height position, one or more discharging steps when the tip of the probe (22) is higher than the first height position and lower than the second height position.

5. The automatic analysis device according to claim **1,** wherein
the second discharging step is shorter than the first discharging step.

6. The automatic analysis device according to claim 1, wherein
the second discharging step is ended by ascending the probe (22) when the cleaning water from the cleaning nozzle (207) is being discharged.

7. The automatic analysis device according to claim 1, wherein
the acceleration when the tip of the probe (22) rises from the state at the second height position is higher than the acceleration when the tip of the probe (22) rises during suction and discharge.

8. The automatic analysis device according to claim 1, further configured to perform:
a water flow confirmation step of confirming a range of a flow of the cleaning water.

9. The automatic analysis device according to claim 8, wherein
in the water flow confirmation step, the positions of both ends in the horizontal direction of the water flow is confirmed by detecting the presence or absence of the cleaning water while moving the probe (22) in the horizontal direction, and the upper end position of the water flow (502) is confirmed by detecting the presence or absence of the cleaning water while moving the probe (22) in the vertical direction.

## Patentansprüche

1. Automatische Analysevorrichtung, die umfasst:
eine Sonde (22), die konfiguriert ist, ein Ansaugen und ein Ausstoßen einer Probe oder eines Reagenz auszuführen, und eine Reinigungsdüse (207), die konfiguriert ist, Reinigungswasser in Richtung einer Außenseite der Sonde (22) auszustoßen,
wobei die automatische Analysevorrichtung (10) konfiguriert ist, einen Sondenreinigungsschritt auszuführen, indem sie nacheinander ausführt:
einen ersten Ausstoßschritt des Startens eines Ausstoßens des Reinigungswassers von der Reinigungsdüse (207), wenn die Spitze der Sonde (22) an einer ersten Höhenposition ist,
einen Sondenanstiegsschritt, in dem sich die Sonde an einer zweiten Höhenposition über der ersten Höhenposition während des ersten Ausstoßschritts befindet,
einen Ausstoßbeendigungsschritt des Beendigens des Ausstoßens des Reinigungswassers von der Reinigungsdüse (207), wenn die Sonde an der zweiten Position ist, und
einen zweiten Ausstoßschritt des erneuten Startens des Ausstoßens des Reinigungswassers von der Reinigungsdüse (207), wenn die Spitze der Sonde (22) an der zweiten Höhenposition ist.

2. Automatische Analysevorrichtung nach Anspruch 1, wobei
in dem zweiten Ausstoßschritt das Reinigungswasser nur auf die Spitze der Sonde (22) angewendet wird.

3. Automatische Analysevorrichtung nach Anspruch 1, wobei
die erste Höhenposition unter einem unteren Ende der Strömung des Reinigungswassers ist.

4. Automatische Analysevorrichtung nach Anspruch 1, wobei
der erste Ausstoßschritt zusätzlich zu dem Ausstoßschritt, wenn die Spitze der Sonde (22) an der ersten Höhenposition ist, einen oder mehrere Ausstoßschritte enthält, wenn die Spitze der Sonde (22) höher als die erste Höhenposition und niedriger als die zweite Höhenposition ist.

5. Automatische Analysevorrichtung nach Anspruch 1, wobei
der zweite Ausstoßschritt kürzer als der erste Ausstoßschritt ist.

6. Automatische Analysevorrichtung nach Anspruch 1, wobei
der zweite Ausstoßschritt durch Aufsteigen der Sonde (22) beendet wird, wenn das Reinigungswasser von der Reinigungsdüse (207) ausgestoßen wird.

7. Automatische Analysevorrichtung nach Anspruch 1, wobei
die Beschleunigung, wenn die Spitze der Sonde (22) von dem Zustand an der zweiten Höhenposition aufsteigt, größer ist als die Beschleunigung, wenn die Spitze der Sonde (22) während des Ansaugens und des Ausstoßens aufsteigt.

8. Automatische Analysevorrichtung nach Anspruch 1, die ferner konfiguriert ist, Folgendes auszuführen:
einen Wasserströmungsbestätigungsschritt des Bestätigens eines Bereichs einer Strömung des Reinigungswassers.

9. Automatische Analysevorrichtung nach Anspruch 8, wobei
in dem Wasserströmungsbestätigungsschritt die Positionen beider Enden in der horizontalen Richtung der Wasserströmung durch Detektieren des Vorhandenseins oder des Fehlens des Reinigungswassers, während die Sonde (22) in die horizontale Richtung bewegt wird, bestätigt werden und die obere Endposition der Wasserströmung (502) durch Detektieren des Vorhandenseins oder des Fehlens des Reinigungswassers, während die Sonde (22) in die vertikale Richtung bewegt wird, bestätigt wird.

## Revendications

1. Dispositif d'analyse automatique comprenant :
une sonde (22) qui est configurée pour effectuer une aspiration et une décharge d'un échantillon ou d'un réactif, et une buse de nettoyage (207) qui est configurée pour décharger de l'eau de nettoyage à l'extérieur de la sonde (22),
le dispositif d'analyse automatique (10) est configuré pour effectuer une étape de nettoyage de sonde en exécutant séquentiellement :
une première étape de décharge consistant à lancer une décharge de l'eau de nettoyage hors de la buse de nettoyage (207) quand la pointe de la sonde (22) est à une première position en hauteur,
une étape de remontée de sonde dans laquelle la sonde est située à une deuxième position en hauteur au-dessus de la première position en hauteur pendant la première étape de décharge,
une étape d'arrêt de décharge consistant à arrêter la décharge de l'eau de nettoyage hors de la buse de nettoyage (207) quand la sonde est à la deuxième position, et
une deuxième étape de décharge consistant à lancer à nouveau une décharge de l'eau de nettoyage hors de la buse de nettoyage (207) quand la pointe de la sonde (22) est à la deuxième position en hauteur.

2. Dispositif d'analyse automatique selon la revendication 1, dans lequel dans la deuxième étape de décharge, l'eau de nettoyage est appliquée uniquement sur la pointe de la sonde (22).

3. Dispositif d'analyse automatique selon la revendication 1, dans lequel la première position en hauteur est en dessous d'une extrémité inférieure de l'écoulement de l'eau de nettoyage.

4. Dispositif d'analyse automatique selon la revendication 1, dans lequel la première étape de décharge inclut, en addition à l'étape de décharge où la pointe de la sonde (22) est à la première position en hauteur, une ou plusieurs étapes de décharge où la pointe de la sonde (22) est plus élevée que la première position en hauteur et est plus basse que la deuxième position en hauteur.

5. Dispositif d'analyse automatique selon la revendication 1, dans lequel la deuxième étape de décharge est plus courte que la première étape de décharge.

6. Dispositif d'analyse automatique selon la revendication 1, dans lequel la deuxième étape de décharge se termine par la remontée de la sonde (22) quand l'eau de nettoyage provenant de la buse de nettoyage (27) est en train d'être déchargée.

7. Dispositif d'analyse automatique selon la revendication 1, dans lequel l'accélération au moment où la pointe de la sonde (22) remonte depuis l'état à la deuxième position en hauteur est plus élevée que l'accélération au moment où la pointe de la sonde (22) remonte pendant l'aspiration et la décharge.

8. Dispositif d'analyse automatique selon la revendication 1, configuré en outre pour effectuer :
une étape de confirmation d'écoulement d'eau consistant à confirmer une plage d'un écoulement de l'eau de nettoyage.

9. Dispositif d'analyse automatique selon la revendication 8, dans lequel
dans l'étape de confirmation d'écoulement d'eau, les positions des deux extrémités dans la direction horizontale de l'écoulement d'eau sont confirmées en détectant la présence ou l'absence de l'eau de nettoyage tout en déplaçant la sonde (22) dans la direction horizontale, et la position d'extrémité supérieure de l'écoulement d'eau (502) est confirmée en détectant la présence ou l'absence de l'eau de nettoyage tout en déplaçant la sonde (22) dans la direction verticale.
